(19) Europäisches Patentamt
European Patent Office
Office européen des brevets

(11) Veröffentlichungsnummer: **0 150 739**
**B1**

# (12) EUROPÄISCHE PATENTSCHRIFT

(45) Veröffentlichungstag der Patentschrift: **08.03.89**

(51) Int. Cl.⁴: **C 07 F 9/48**

(21) Anmeldenummer: **85100254.3**

(22) Anmeldetag: **12.01.85**

ERRATUM

| DIE TEXTSTELLE: TEXT PUBLISHED: LE PASSAGE SUIVANT: | (SEITE, SPALTE, ZEILE) (PAGE, COLUMN, LINE) (PAGE, COLONNE, LIGNE) | | | LAUTET BERICHTIGT: SHOULD READ: DEVRAIT ETRE LU: |
|---|---|---|---|---|
| worin $R^1$ $(C_2-C_{12})$-Alkyl | 3 | | 41 | worin $R^1$ $(C_1-C_{12})$-Alkyl |

Tag der Entscheidung über die Berichtigung / Date of decision on rectification: / Date de décision portant sur modification: 30.03.89

Ausgabe- und Veröffentlichungstag: / Issue and publication date: / Date d'edition et de publication: 31.05.89

Patbl.Nr. / EPB no: / Bull. no: 89/22

(19) Europäisches Patentamt
European Patent Office
Office européen des brevets

(11) Veröffentlichungsnummer: **0 150 739**
**B1**

# (12) EUROPÄISCHE PATENTSCHRIFT

(45) Veröffentlichungstag der Patentschrift: **08.03.89**

(51) Int. Cl.[4]: **C 07 F 9/48**

(21) Anmeldenummer: **85100254.3**

(22) Anmeldetag: **12.01.85**

## (54) Verfahren zur Herstellung alkanphosphoniger Säuren.

(30) Priorität: **21.01.84 DE 3402018**

(43) Veröffentlichungstag der Anmeldung: **07.08.85 Patentblatt 85/32**

(45) Bekanntmachung des Hinweises auf die Patenterteilung: **08.03.89 Patentblatt 89/10**

(84) Benannte Vertragsstaaten: **AT BE CH DE FR GB IT LI NL SE**

(56) Entgegenhaltungen: **US-A-2 584 112**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr.-Ing., Altkönigstrasse 11a, D-6242 Kronberg/Taunus (DE)**

**EP 0 150 739 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Alkanphosphonige Säuren sind wertvolle Zwischenprodukte zu Herstellung von Pflanzenschutztmitteln und Flammschutzmitteln. Verschiedene Salze kurzkettiger alkanphosphoniger Säuren sind als fungizide Mittel vorgeschlagen worden (EP-PS-0 038 178).

Die Herstellung alkanphoshpniger Säuren erfolgt z. B. durch Hydrolyse von Alkyl-dichlor-phosphanen (DE-OS-3 146 196). Außerdem werden sie bei der Oxidation von Monoalkylphosphanen gebildet. Letztere entstehen u. a. als Nebenprodukte - z. T. in geringen Mengen - bei technischen Prozessen (vgl. DE-AS-2 540 283; EP-OS-0 026 278). Wegen ihrer leichten oxidierbarkeit, ihrer extremen Giftigkeit und des widerlichen Geruchs müssen sie durch Weiterverarbeitung unschädlich gemacht werden. Die Überführung von als Nebenprodukte anfallenden Monoalkylphosphanen in wertvolle und unbedenkliche Folgeprodukte ist daher zusätzlich von Bedeutung.

Es ist bereits bekannt, Monoalkylphospahne mit Wasserstoffperoxid zu alkanphosphonigen Säuren zu oxidieren. (Houben-Weyl, Bd. XII/1, S. 297; US-PS-2 548 112). Als vorteilhafte Lösungsmittel wird in US-PS-2 584 112 Essigsäure vorgeschlagen, als Aktivator Molybdänoxid. Bei diesem Verfahren entstehen jedoch in größeren Mengen Phosphorsäure und Alkanphosphonsäuren als Nebenprodukte. Beispielsweise werden bei der Oxidation von tert.-Dodecylphosphan bei 50° C 10% Phosphorsäure und 13 % Phosphonsäure erhalten.

Es wurde nun überraschendeweise gefunden, daß man reine alkanphosphonige Säuren der allgemeinen Formel I

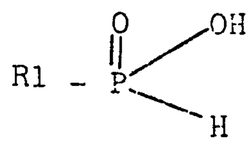

(I)

worin $R^1$ ($C_1$-$C_{12}$) Alkylgruppen, bevorzugt die Methyl- oder Ethylgruppe bedeutet, herstellen kann, wenn man Monoalkylphosphane der allgemeinen Formel II

$R^1$ - $PH_2$ (II)

in chlorwasserstoffsaurer Lösung mit Wasserstoffproxid bei Temperaturen zwischen 0°C und der Siedetemperatur des Gemisches umsetzt, wobei $H_2O_2$ mindestens in stöchiometrischer Menge und HCl in einem deutlichen stöchiometrische Überschuß vorliegen. Als Monoalkylphosphane kommen z. B. Methyl-, Ethyl-, Butyl- oder Oktylphosphanen in Frage.

Die Phosphane werden in Salzsäure gelöst, deren Konzentration ca. 5 % nicht unterschreiten soll. Die untere Grenze der Konzentration der Phosphane in der Salzsäure kann bis 0,0001 Gew.-% betragen. Wegen der geringen Basizität der Phosphane und der Flüchtigkeit insbesondere der niederen Homologen ist darauf zu achten, daß der Chlorwasserstoff immer in einem deutlichen stöchiometrischem Überschuß vorhanden ist. Gegebenenfalls kann Chlorwasserstoff während der Zugabe des Wasserstoffperoxids zudosiert werden, um in dem Reaktionsgemisch eine genügend hohe $H^+$-Ionenkonzentration sicherzustellen.

Wasserstoffperoxid wird zweckmäßig in konzentrierter wässriger Lösung zugesetzt, beispielseise 30 oder 35 %-ig. Bei Verwendung stöchiometrischer Mengen sind für die Oxidation von 1 Mol Phosphan 2 Mol Wasserstoffperoxid erforderlich. Bei Einhaltung niedriger Temperaturen kann auch ein geringerfügiger Überschuß an $H_2O_2$ eingesetzt werden, ohne daß es zu einer Weiteroxidation zu den Alkanphosphonsäuren kommt.

Es kann zweckmäßig sein, die Umsetzung unter Inertgasatmosphäre (Stickstoff) durchzuführen.

Die Reaktion wird zwischen 0° und der Siedetemperatur des Gemisches, vorzugweise bei 20 bis 100°C, durchgeführt. Die Reaktion ist exotherm. Gegebenenfalls muß die Reaktionstemperatur durch Kühlung eingehalten werden. Gewünschtenfalls kann die Umsetzung auch unter Druck durchgeführt werden.

Die Aufarbeitung der Reaktionslösungen erfolgt auf einfache Weise durch Abdestiliation des Wassers und des Chlorwasserstoffs. Dabei sollen bei der Gewinnung der methan- und ethanphosphonigen Säure Innentemperaturen von 90 - 100°C nicht überschritten werden, da sich sonst die phosphonige Säuren teilweise zersetzen. Restgehalte von Chlorwasserstoff in den Endprodukte können bei 80 - 100°C weitgehend durch Anlegen eines Vakuums oder durch Strippen mit Stickstoff entfernt werden.

Das Verfahren der vorliegenden Anmeldung ist besonders von Interesse für die Behandlung phosphanhaltiger Abfallsalzsäuren, wie sie bei technischen Prozessen anfallen. Es liefert alkanphosphonige Säuren mit über 95 %-iger Reinheit. Auch in Gegenwart großer Mengen alkanphosphoniger Säuren tritt praktisch keine Weiteroxidation zu Alkanphosphonsäuren und Phosphorsäure ein, bevor die Oxidation der Monoalkylphosphane zu den alkanphosphonigen Säuren beendet ist. Es ist besonders überraschend, daß dies auch fur die ersten Glieder der homologen Monoalkylphosphane, Methyl- und Ethylphosphan, zutrifft, da bekannt ist, daß mit fallender Kettenlänge die Monoalkylphosphane gegenüber Oxidationsmitteln instabiler werden. Eine Umwandlung in die Phosphonsäuren war daher zu erwarten (Houben-Weyl, Bd. XII/1, S. 69, 359).

**Beispiel 1**

In 250 g konz. Salzsäure, die 5,4 g (0,1125 mol) Methylphosphan enthalten, werden unter Kühlung, Rühren und unter Stickstoffspülung 21,8 g 35 %-ige (0,225 mol) Wasserstoffperoxidlösung während 45 Min. eingetropft. Nach Beendigung der Umsetzung erkennt man in $^{31}$P-NMR-Spektrum, daß die gebildete Lösung mehtanphosphoniger Säure in Salzsäure nur ca. 2 % Methanphosphonsäure, bezogen auf den Gesamt-Phosphor, enthält.

**Beispiel 2**

In 1 kg 16 %-ige Salzsäure, das 1,1 g (0,023 mol) Methylphosphan enthält, werden bei 30°C unter Rühren und unter Stichstoffatmosphäre 4,5 g 35 %-ige (0,047 mol) Wasserstoffperoxidlösung eingetropft unter schwachem Erwärmen. Dann wird die Lösung im Vakuum bei 30 - 40°C vorsichtig eingeengt. Die erhaltene Lösung an methanphosphoniger Säure zeigt im $^{31}$-P-NMR-Spektrum keine Verunreinigungen.

**Beispiel 3**

In 223 g konz. Salzsäure, die 8 g (0,166 mol) Methylphosphan enthalten, werden bei 85 % unter leichter Kühlung, unter Rühren und unter Stickstoffatmosphäre 32,4 g 35 %-ige (0,334 mol) Wasserstoffperoxidlösung eingetropft. Nach 40 Min. ist die Umsetzung beendet. Man erkennt im $^{31}$P-NMR-Spektrum, daß die gebildete Lösung methanphosphoniger Säure in Salzsäure 2,7 % Methanphosphonsäure 0,5 % phosporige Säure und 0,6 % Phosphonsäure, bezogen auf den Gesamt-Phosphor, enthält.

**Patentansprüche**

1. Verfahren zur Herstellung von alkanphosphonigen Säuren der Formel

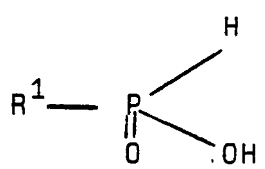

(I)

worin $R^1$ ($C_2$-$C_{12}$)-Alkyl bedeutet, dadurch gekennzeichnet, daß man Monoalkylphosphane der Formel

$R^1 - PH_2$ (II)

in chlorwasserstoffsaurer Lösung mit Wasserstoffperoxid bei Temperaturen zwischen 0° und der Siedetemperatur des Gemisches umsetzt, wobei $H_2O_2$ mindestens in stöchiometrischer Menge und HCl in einem deutlichen stöchiometrischen Überschuß vorliegen.

2. Verfahren gemäß Anspruch 1, dadurch gekennzeichnet, daß man die Umsetzung bei 20 - 100°C durchführt.

3. Verfahren gemäß Anspruch 1 oder 2, dadurch gekennzeichnet, daß man die Umsetzung in einer Stickstoffatmosphäre durchführt.

4. Verfahren gemäß Anspruch 1, 2 oder 3, dadurch gekennzeichnet, daß man die Umsetzung unter Druck durchführt.

**Claims**

1. A process for the preparation of an alkanephosphonous acid of the formula

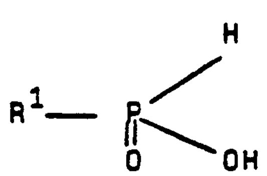

(I)

in which $R^1$ denotes ($C_1$-$C_{12}$)-alkyl, which comprises reacting a monoalkylphosphane of the formula

$R^1 - PH_2$ (II)

with hydrogen peroxide in a solution containing hydrochloric acid at temperatures between 0° and the boiling point of the mixture, the $H_2O_2$ being present in at least the stoichiometric amount and HCl being present in a clear stoichiometric excess.

2. The process as claimed in claim 1, wherein the reaction is carried out at 20 - 100°C.

3. The process as claimed in either of claims 1 and 2, wherein the reaction is carried out in a nitrogen atmosphere.

4. The process as claimed in any one of claims 1, 2 or 3, wherein the reaction is carried out under pressure.

## Revendications

1. Procédé pour préparer des acides alcanephosphoneux répondant à la formule I:

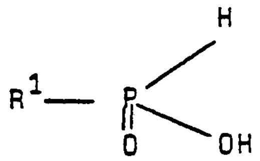

(I)

dans laquelle $R^1$ représente un radical alkyle en $C_1$-$C_{12}$, procédé caractérisé en ce qu'on fait réagir des monoalkylphosphines de formule II

$R^1 - PH_2$ (II)

dans une solution acidifiée par de l'acide chlorhydrique, avec du peroxyde d'hydrogène, à des températures comprises entre 0°C et la température d'ébullition du mélange, en utilisant une quantité de $H_2C_2$ au moins égale à la quantité stoechiométrique et une quantité d'HCl représentant un net excès relativement à la quantité stoechiométrique.

2. Procédé selon la revendication 1 caractérisé en ce qu'on effectue la réaction à une température de 20 à 100°C.

3. Procédé selon l'une des revendications 1 et 2 caractérisé en ce qu'on effectue la réaction dans une atmosphère d'azote.

4. Procédé selon l'une quelconque des revendications 1, 2 et 3, caractérisé en ce qu'on effectue la réaction sous pression.